# EUROPEAN PATENT APPLICATION

(11) **EP 4 443 151 A1**
(43) Date of publication of application: **09.10.2024**
(21) Application number: 22927247.1
(22) Date of filing: 05.09.2022
(51) Int. Cl.: G01N 27/62, H01J 49/04, H01J 49/16

(54) **SPECIMEN SUPPORT, IONIZATION METHOD, AND MASS SPECTROMETRY METHOD**

(30) Priority: 16.02.2022 JP 2022021999
(71) Applicant: Hamamatsu Photonics K.K., Hamamatsu-shi, Shizuoka 435-8558 (JP)
(72) Inventor: IKEDA Takamasa, Hamamatsu-shi, Shizuoka 435-8558 (JP); KOTANI Masahiro, Hamamatsu-shi, Shizuoka 435-8558 (JP); OHMURA Takayuki, Hamamatsu-shi, Shizuoka 435-8558 (JP)
(74) Representative: Grünecker Patent- und Rechtsanwälte PartG mbB
(86) International application number: PCT/JP2022/033329
(87) International publication number: WO 2023/157353

(57) **Abstract**

A sample support includes: a substrate having a first surface, a second surface opposite to the first surface, and a porous structure opening at least to the first surface; a protective layer provided to cover a surface of the porous structure; and a conductive layer provided so as to cover a portion of the protective layer at least provided on the first surface.

## Description

### Technical Field

The present disclosure relates to a sample support, ionization method, and mass spectrometry method.

### Background Art

A sample support for ionizing a sample such as a biological sample is known (for example, Patent Document 1). The sample support has a porous structure formed so as to communicate the first surface and the second surface. A conductive layer is provided on the first surface.

### Citation List

### Patent Document

Patent Document 1: WO 2019/155741

### Summary of Invention

### Technical Problem

In the sample support as described above, a component of the sample is ionized by irradiating the sample transferred onto the first surface (or the sample sucked up from the second surface side to the first surface side) with an energy beam such as a laser beam. Here, if a component derived from the substrate (porous structure body) is generated as noise component (background noise) when the substrate is irradiated with the laser beam, the detection accuracy of the component of the ionized sample may be reduced.

An object of the present disclosure is to provide a sample support, an ionization method, and a mass spectrometry method capable of effectively suppressing generation of a noise component when a sample is ionized.

### Solution to Problem

A sample support according to an aspect of the present disclosure is a sample support for ionizing a sample, the sample support including a substrate having a first surface, a second surface opposite to the first surface, and a porous structure opening at least to the first surface; a protective layer provided to cover a surface of the porous structure; and a conductive layer provided so as to cover a portion of the protective layer at least provided on the first surface.

In the sample support, a protective layer is provided so as to cover the surface of the porous structure. That is, the material of the substrate (i.e., particles) is protected by the protective layer so as not to be exposed to the outside. Accordingly, when the sample is ionized by irradiating the first surface of the substrate with the energy beam, it is possible to effectively suppress generation of a component derived from the material of the substrate as a noise component.

The protective layer may be formed of at least one of an oxide, a fluoride, a nitride, a carbide, and a metal. According to the above-described configuration, the protective layer having the above-described protective function can be suitably formed.

The protective layer may be formed of at least one of aluminum oxide, magnesium oxide, hafnium oxide, silicon oxide, magnesium fluoride, aluminum nitride, silicon nitride, silicon carbide, tungsten, hafnium, diamond, and graphite. According to the above-described configuration, the protective layer having the above-described protective function can be suitably formed.

The protective layer may be an ALD layer. According to the above-described configuration, the protective layer can be densely and continuously formed without a gap on the surface of the porous structure by an atomic layer deposition (ALD) method. According to this, it is possible to suitably suppress the surface of the porous structure from being exposed to the outside, and it is possible to more effectively suppress a component derived from the material of the substrate from being generated as a noise component.

The porous structure may be formed of an aggregate of a plurality of particles. The porous structure may have a joint in which the particles adjacent to each other are bonded to each other to form a recessed portion between the particles. The protective layer may be provided so as to cover at least a portion of surfaces of the plurality of particles and the joint, the portion constituting the first surface. According to the above configuration, the surfaces of the plurality of particles and the joint are protected by the protective layer so as not to be exposed to the outside. This makes it possible to effectively suppress the generation of component derived from the material of the substrate as noise component when ionizing the sample by irradiating the first surface of the substrate with the energy beam, in a case where the porous structure is formed of a plurality of the particles.

The average diameter of the joint in the porous structure may be equal to or greater than one tenth of the average diameter of the particle in the porous structure and less than the average diameter of the particle. According to the above configuration, the strength of the joint in the porous structure can be ensured, and the strength (rigidity) of the substrate that can withstand the transfer of the sample to the first surface can be ensured.

The particles may be glass beads. According to the above configuration, a substrate having the above-described porous structure can be suitably obtained at low cost.

The substrate may be an anodic oxide film formed of valve metals or silicon. The porous structure may have a plurality of pores that open at least to the first surface and extend in a thickness direction of the substrate. According to the above-described configuration, in a case where the porous structure is formed of the plurality of pores extending in the thickness direction of the substrate, it is possible to effectively suppress the generation of components derived from the material of the side substrate as noise components when ionizing the sample by irradiating the first surface of the side substrate with the energy beam.

An ionization method according to another aspect of the present disclosure includes a first step of preparing the sample support, a second step of transferring a sample to the first surface, and a third step of ionizing a component of the sample by irradiating the first surface with an energy beam.

According to the above-described ionization method, in the case of adopting the transfer method in which the sample to be ionized is transferred to the first surface of the above-described sample support, the same effect as that of the above-described sample support can be obtained. That is, when the sample is ionized by irradiating the first surface of the substrate with the energy beam, it is possible to effectively suppress a component derived from the material of the substrate from being generated as a noise component.

An ionization method according to another aspect of the present disclosure includes a first step of preparing a sample support having a porous structure configured to allow a first surface and a second surface to communicate with each other, a second step of placing the sample support on the sample so that the second surface faces the sample, and a third step of ionizing a component of the sample by irradiating the first surface with an energy beam after the component of the sample has moved from the second surface side to the first surface side by a capillary phenomenon.

According to the above-described ionization method, in the case of adopting the suction method in which the sample to be ionized is sucked up from the second surface side to the first surface side of the above-described sample support by using the capillary phenomenon, the same effect as that of the above-described sample support can be obtained. That is, when the sample is ionized by irradiating the first surface of the substrate with the energy beam, it is possible to effectively suppress a component derived from the material of the substrate from being generated as a noise component.

A mass spectrometry method according to another aspect of the present disclosure includes the first step, the second step, and the third step of the ionization method described above, and a fourth step of detecting the component ionized in the third step.

According to the mass spectrometry method, by including the first step, the second step, and the third step of the ionization method, the same effects as those of the ionization method are obtained.

### Advantageous Effects of Invention

According to the present disclosure, it is possible to provide a sample support, an ionization method, and a mass spectrometry method capable of effectively suppressing generation of a noise component when a sample is ionized.

### Brief Description of Drawings

FIG. 1 is a perspective view of a sample support according to an embodiment.
FIG. 2 is an enlarged image of a region A shown in FIG. 1.
FIG. 3 is a diagram schematically showing a state of a bead aggregate constituting the first surface.
FIG. 4 is a view showing a second step in the mass spectrometry method of one embodiment.
FIG. 5 is a configuration diagram of a mass spectrometer in which the mass spectrometry method of the embodiment is performed.
FIG. 6 is a graph showing the measurement results of blank noise in the example and the comparative example.
FIG. 7 is an enlarged image of a portion corresponding to a region A of a substrate according to a modification.
FIG. 8 is a diagram schematically showing a cross-sectional structure of a part of the substrate according to the modification.

### Description of Embodiments

Hereinafter, embodiments of the present invention will be described in detail with reference to the drawings. In the drawings, the same or corresponding parts are denoted by the same reference numerals, and redundant description will be omitted. In the drawings, some characteristic parts according to the embodiment are exaggerated for easy understanding. Therefore, the dimensional ratios in the drawings may be different from the actual dimensional ratios.

### [Sample Support]

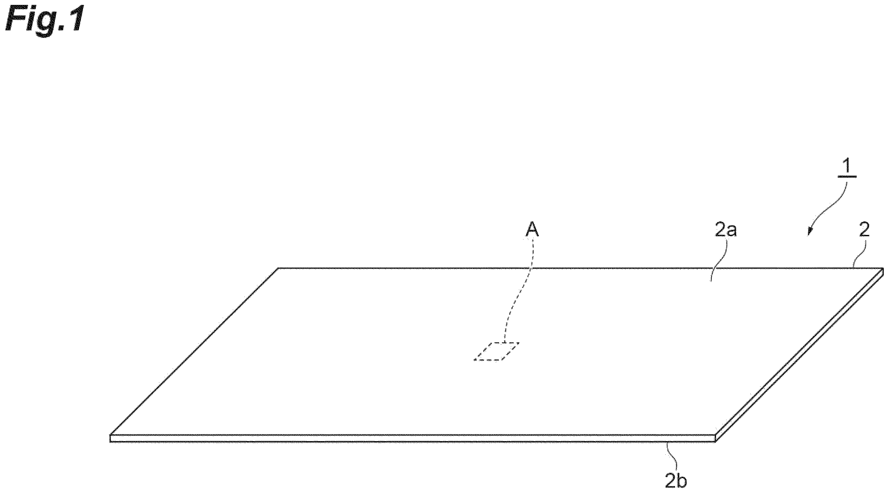

As shown in FIG. 1, a sample support 1 includes a substrate 2. As an example, the substrate 2 is formed in a rectangular plate shape. The substrate 2 has a first surface 2a and a second surface 2b opposite to the first surface 2a. One side of the substrate 2 is, for example, about several centimeters when viewed from a thickness direction of the substrate 2 (that is, the direction in which the first surface 2a and the second surface 2b face each other). The thickness of the substrate 2 (distance from the first surface 2a to the second surface 2b) is, for example, about 100 µm to 1500 µm.

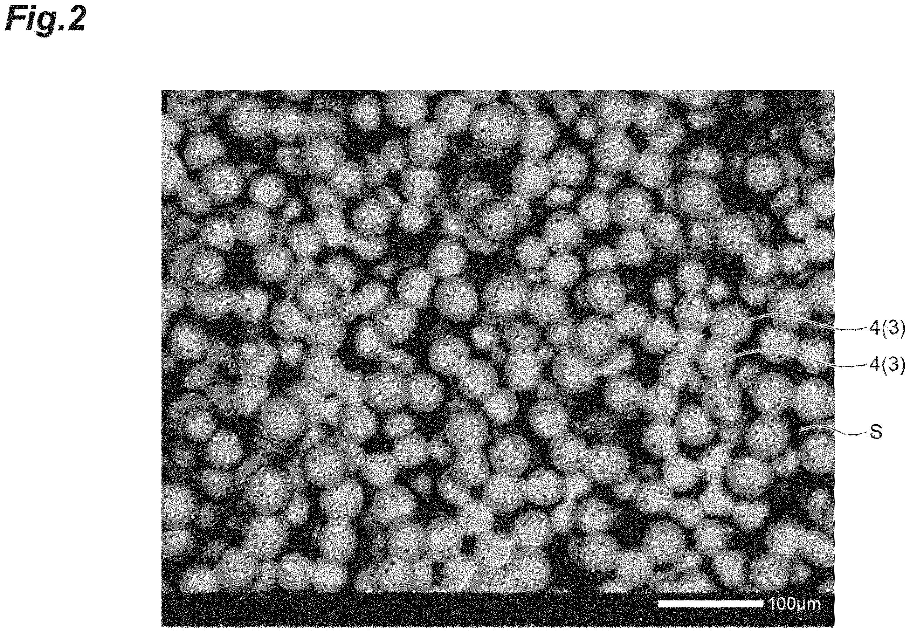

As shown in FIG. 2, the substrate 2 is formed with an irregular porous structure 3 opening to the first surface 2a. FIG. 2 shows a state before a conductive layer 6 and a protective layer 7 to be described later are formed. The irregular porous structure is, for example, a structure in which gaps (fine pores) extend in irregular directions and are irregularly distributed in three dimensions. Example of the irregular porous structure includes a structure that enters the substrate 2 from one inlet (opening) on the first surface 2a side and branches into a plurality of paths, and a structure that enters the substrate 2 from a plurality of inlets (openings) on the first surface 2a side and merges into one path. On the other hand, for example, a structure in which a plurality of pores extending linearly along the thickness direction of the substrate 2 from the first surface 2a to the second surface 2b are provided as main pores (that is, a regular structure constituted by pores extending mainly in one direction) is not included in the irregular porous structure.

The porous structure 3 is formed of, for example, an aggregate of a plurality of bead-like particles. The aggregate of a plurality of bead-like particles is a structure in which a plurality of particles are aggregated so as to be in contact with each other. Examples of the aggregate of a plurality of particles include a structure in which a plurality of particles are adhered or bonded to each other. In the present embodiment, the porous structure 3 is a bead aggregate (aggregate) formed by joining a plurality of spherical beads (particles) to each other. That is, the substrate 2 is formed of the bead aggregate (the porous structure 3) obtained by joining a plurality of beads to each other and forming the beads into a rectangular plate shape. The porous structure 3 includes a portion occupied by a plurality of the beads 4 and gaps S between the plurality of the beads 4.

In the present embodiment, the beads 4 are glass beads. In this case, the bead aggregate is, for example, a sintered body of a plurality of glass beads (beads 4). According to the above configuration, by using the glass beads, it is possible to suitably and inexpensively obtain the substrate 2 having the irregular porous structure 3. In the present embodiment, the entire of the substrate 2 is made of the porous structure 3. In other words, the porous structure 3 is formed over the entire region from the first surface 2a to the second surface 2b in the substrate 2. Thus, the porous structure 3 is formed so as to communicate the first surface 2a and the second surface 2b.

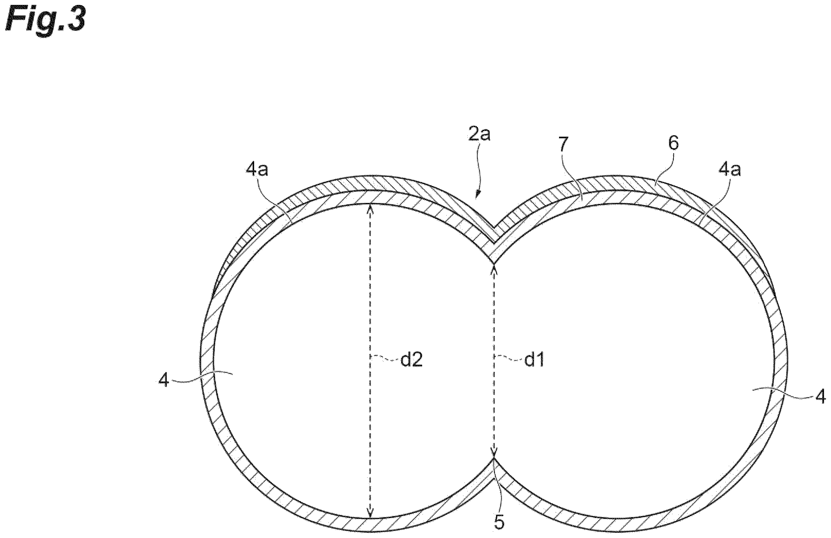

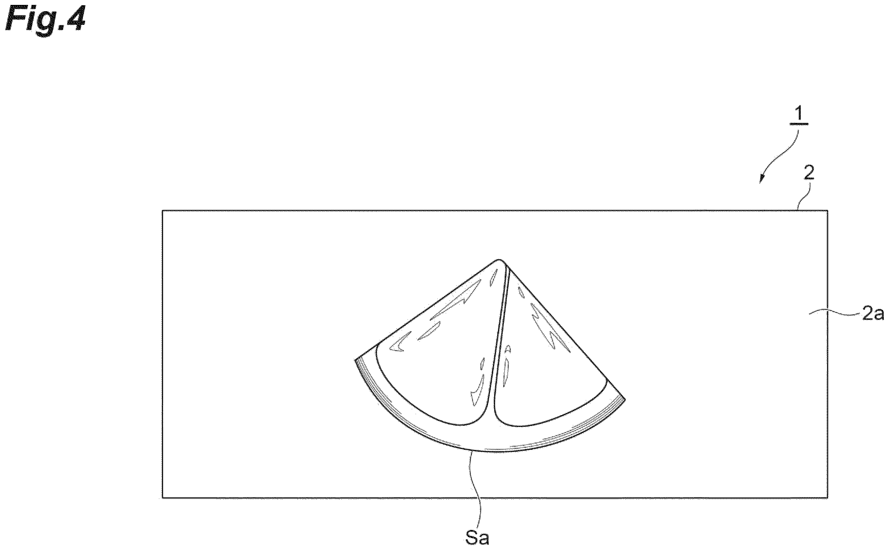

As shown in FIG. 3, the beads 4 adjacent to each other are joined (fused) to each other. A recessed portion is formed between the beads 4 by joining the beads 4 adjacent to each other. That is, the porous structure 3 has a joint 5 that forms the recessed portion. Here, the substrate 2 has rigidity to the extent that a second step (transfer of a sample Sa (see FIG. 4)) of the ionizing method described later can be performed. If the substrate 2 is insufficiently rigid, the substrate 2 may be damaged, such as when the sample Sa is pressed against the first surface 2a or when the sample Sa is peeled from the first surface 2a. Therefore, the substrate 2 has rigidity that can withstand the transfer of the sample Sa (that is, the operation of pressing the sample Sa against the first surface 2a and the operation of peeling off the sample Sa from the first surface 2a) (that is, rigidity to the extent that the substrate 2 is not damaged by the transfer of the sample Sa). In the present embodiment, the average diameter of the joints 5 formed between the beads 4 adjacent to each other (the average of the diameter dl of each joint 5) is equal to or greater than one tenth (1/10) of the average diameter of the beads 4 (the average of the diameter d2 of each beads 4) and less than the average diameter of the beads 4. According to the above-described configuration, it is possible to ensure the strength of the joint 5 in the porous structure 3, and it is possible to ensure the substrate strength (rigidity) that can withstand the transfer of the sample Sa to the first surface 2a.

Further, as shown in FIG. 3, the protective layer 7 is provided so as to cover the surfaces 4a of the porous structure 3 (in the present embodiment, the plurality of beads 4). The protective layer 7 is provided so as to cover at least a portion constituting the first surface 2a among the surfaces 4a of the plurality of beads 4 and the joint 5. In the present embodiment, as an example, the protective layer 7 is provided so as to cover the entire of the surfaces 4a of the plurality of beads 4 and the joint 5 (the entire surfaces exposed to the outside), including the portion that does not constitute the first surface 2a. For example, the protective layer 7 is formed densely and continuously without gaps on the surfaces 4a of the plurality of beads 4 and the joint 5. The conductive layer 6 is provided so as to cover a portion of the protective layer 7 at least provided on the first surface 2a. Here, the portion of the protective layer 7 provided on the first surface 2a is a portion exposed on the first surface 2a side of the substrate 2. For example, the portion is a portion that can be seen when the substrate 2 is viewed from a position facing the first surface 2a. In the example of FIG. 3, the two beads 4 joined to each other are arranged side by side in a direction orthogonal to the thickness direction of the substrate 2, and the upper surfaces of the two beads 4 constitute the first surface 2a. That is, the conductive layer 6 covers the surface of the protective layer 7 exposed on the first surface 2a side so as to straddle the upper surfaces of the two beads 4.

The conductive layer 6 is formed of a conductive material. As the material of the conductive layer 6, metals having low affinity (reactivity) with the sample and high conductivity are preferably used for the reasons described below.

For example, when the conductive layer 6 is formed by metals such as Cu having high affinity with samples such as proteins, the sample is ionized in a state where Cu atom is attached to sample molecules in a process of ionizing the sample to be described later, and a detection result in mass spectrometry to be described later may be deviated by the amount of attachment of the Cu atom. Therefore, metals having a low affinity with the sample are preferably used as the material of the conductive layer 6.

On the other hand, the higher the conductivity of the metal, the easier and more stably a constant voltage can be applied. Therefore, when the conductive layer 6 is formed of metals having high conductivity, a voltage can be uniformly applied to the first surface 2a of the substrate 2. Further, a metal having higher electrical conductivity tends to have higher thermal conductivity. Therefore, when the conductive layer 6 is formed of metals having high conductivity, the energy of an energy beam (for example, a laser beam) applied to the substrate 2 can be efficiently transmitted to the sample through the conductive layer 6. Therefore, metals having high conductivity are preferably used as the material of the conductive layer 6.

From the above viewpoint, as the material of the conductive layer 6, for example, gold, platinum, or the like is preferably used. The conductive layer 6 is formed by, for example, a plating method, an atomic layer deposition method (ALD), a vapor deposition method, a sputtering method, or the like so as to have thickness of about 1 nm to 350 nm. As the material of the conductive layer 6, for example, Cr (chromium), Ni (nickel), Ti (titanium), or the like may be used.

The conductive layer 6 is formed so as to cover the surfaces of the protective layer 7 exposed on the first surface 2a side as shown in FIG. 3, for example, by performing the above-described vapor deposition method, sputtering method, or the like from the first surface 2a side. On the other hand, when the conductive layer 6 is formed by ALD, the conductive layer 6 may be formed to cover the entire of the surface of the protective layer 7 covering the surface 4a of each of the beads 4. In this way, the conductive layer 6 may be provided so as to cover not only the portion of the protective layer 7 provided on the first surface 2a but also the entire surface of the protective layer 7.

The protective layer 7 prevents the beads 4 from being directly irradiated with a laser beam L (a kind of energy beam) when the first surface 2a of the substrate 2 is irradiated with the laser beam L in the third step described later. Accordingly, a component derived from the material of the substrate 2 (that is, the beads 4) is suppressed from being generated as a noise component. That is, the protective layer 7 has a noise reduction function of suppressing the generation of the noise component.

From the viewpoint of effectively exhibiting the noise reduction function, the protective layer 7 is preferably formed of a material having a relatively high melting temperature or evaporation start temperature. For example, the protective layer 7 may be formed by oxides, fluorides, nitrides, carbides, metals, etc. In addition, the protective layer 7 may be formed of oxides such as aluminum oxides, magnesium oxides, hafnium oxides, and silicone oxides. The protective layer 7 may be formed of fluorides such as magnesium fluorides. The protective layer 7 may be formed of nitrides such as aluminum nitrides and silicone nitrides. The protective layer 7 may be formed of carbides such as silicone carbides. Alternatively, the protective layer 7 may be formed of metals such as tungsten, hafnium, or may be formed of diamond or graphite. When the protective layer 7 is formed of the above-described material, the protective layer 7 having the above-described protection functions (noise reduction functions) can be suitably formed. The protective layer 7 is, for example, not thicker than 100 nm.

The protective layer 7 may be configured as an ALD layer. That is, the protective layer 7 may be formed by an atomic layer deposition (ALD) method. In this case, as shown in FIG. 3, the protective layer 7 can be formed densely and continuously without a gap on the surfaces 4a of the plurality of the beads 4 and the joints 5 by ALD. According to this, it is possible to suitably suppress the surface of the beads 4 and the joint 5 from being exposed to the outside, and it is possible to more effectively suppress a component derived from the substrate 2 material (that is, the beads 4) from being generated as a noise component.

However, the method of forming the protective layer 7 is not limited to ALD. For example, the protective layer 7 may be formed by a general film forming method such as vapor phase film forming including physical vapor deposition (PVD) such as ion-plating and chemical vapor deposition (CVD), and liquid phase film forming including a sol gel method and coating. In addition, the protective layer 7 does not necessarily have to be formed so as to cover the surfaces 4a of all of the beads 4 constituting the substrate 2. For example, the protective layer 7 may be formed so as to cover the surface 4a of a part of the beads 4 (including the beads 4 constituting the first surface 2a) located on the first surface 2a side of the substrate 2.

### [Ionization Method and Mass Spectrometry Method]

An example of an ionizing method and a mass spectrometry method using the sample support 1 will be described. First, the above-described sample support 1 is prepared as a sample support for ionizing a sample (first step). The sample support 1 may be prepared by being manufactured by a person who performs the ionizing method and the mass spectrometry method, or may be prepared by being transferred from a manufacturer, a seller, or the like of the sample support 1.

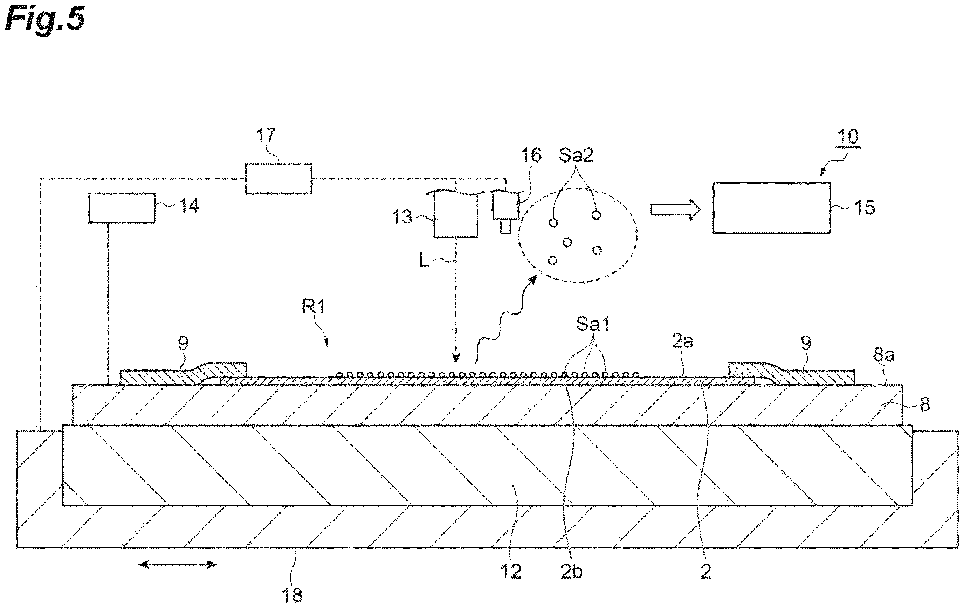

Subsequently, as shown in FIG. 4, the sample Sa is transferred to the first surface 2a of the substrate 2 (second step). In the example of FIG. 4, the sample Sa is a slice of a fruit (lemon). For example, a component Sa1 of the sample Sa (see FIG. 5) is deposited on the first surface 2a by pressing the sample Sa against the first surface 2a of the substrate 2.

Subsequently, after the component Sa1 of the sample Sa adheres to the first surface 2a, the component Sa1 of the sample Sa is ionized by irradiating the first surface 2a with an energy beam while applying a voltage to the first surface 2a (the conductive layer 6) (third step). As an example, the above-described third step can be performed by using a mass spectrometer 10 shown in FIG. 5. The mass spectrometer 10 includes a support 12, an irradiation unit 13, a voltage application unit 14, an ion detector 15, a camera 16, a controller 17, and a sample stage 18.

The sample support 1 is placed on the support 12. The support 12 is placed on the sample stage 18. Here, as an example, the sample support 1 is fixed on a support substrate 8 via a conductive tape 9 in a state where the second surface 2b of the substrate 2 is placed on a support surface 8a of the support substrate 8. With the sample support 1 thus fixed on the support substrate 8, the support substrate 8 is placed on the support 12. The conductive tape 9 is located at the edge of the substrate 2 and extends between the first surface 2a of the substrate 2 and the support surface 8a of the support substrate 8. The first surface 2a and the support surface 8a are electrically connected via the conductive tape 9. The support substrate 8 may be formed, for example, by a glass slide. In the present embodiment, as an example, the support substrate 8 is a glass substrate (ITO slide glass) on which a transparent conductive film such as an indium tin oxide (ITO) film is formed, and the surface of the transparent conductive film is the support surface 8a. That is, in the present embodiment, the entire of the support surface 8a has conductivity.

The irradiation unit 13 irradiates the first surface 2a of the sample support 1 with energy beam such as the laser beam L. The voltage application unit 14 applies a voltage to the first surface 2a of the sample support 1. The ion detector 15 detects a component (a sample ion Sa2) of the ionized sample. The camera 16 acquires a camera image including an irradiation position of the laser beam L by the irradiation unit 13. The camera 16 is, for example, a small CCD camera associated with the irradiation unit 13. The controller 17 controls the operation of the sample stage 18, the camera 16, the irradiation unit 13, the voltage application unit 14, and the ion detector 15. The controller 17 is, for example, a computer device including a processor (for example, a central processing unit (CPU) or the like), a memory (for example, a read only memory (ROM), a random access memory (RAM), or the like), and the like.

A voltage is applied to the support surface 8a of the support substrate 8 by the voltage application unit 14. As a result, a voltage is applied to the conductive layer 6 (see FIG. 3) on the first surface 2a of the substrate 2 via the support surface 8a and the conductive tape 9.

Subsequently, the controller 17 operates the irradiation unit 13 based on the image acquired by the camera 16. More specifically, the controller 17 operates the irradiation unit 13 so that the laser beam L is irradiated to the first surface 2a in a laser irradiation range (for example, a region in which the component Sa1 of the sample specified based on the image acquired by the camera 16 exists).

As an example, the controller 17 moves the sample stage 18 and controls the irradiation operation (irradiation timing and the like) of the laser beam L by the irradiation unit 13. That is, the controller 17 causes the irradiation unit 13 to irradiate the laser beam L after confirming that the sample stage 18 has moved by a predetermined distance. For example, the controller 17 repeats the movement (scanning) of the sample stage 18 and the irradiation of the laser beam L by the irradiation unit 13 so as to raster-scan the laser irradiation range. The change of the irradiation position with respect to the first surface 2a may be performed by moving the irradiation unit 13 instead of the sample stage 18 or may be performed by moving both the sample stage 18 and the irradiation unit 13.

By the above-described third step, the component Sa1 of the sample on the first surface 2a is ionized, and the sample ion Sa2 is released. More specifically, energy is transmitted from the conductive layer 6 which has absorbed energy of the laser beam L to the component Sa1 of the sample on the first surface 2a, and the component Sa1 which has acquired energy is vaporized and acquires electric charge to become the sample ion Sa2. The released sample ion Sa2 moves while accelerating toward ground electrode (not shown) provided between the sample support 1 and the ion detector 15. That is, the sample ion Sa2 moves toward the ground electrode while being accelerated by the potential difference generated between the conductive layer 6 to which the voltage is applied and the ground electrode. Then, the sample ion Sa2 is detected by the ion detector 15 (fourth step).

The first to third steps described above correspond to an ionizing method using the sample support 1. In addition, the first to fourth steps described above correspond to a mass spectrometry method using the sample support 1.

### [Effects]

In the above-described the sample support 1, the conductive layer 6 (see FIG. 3) is provided so as to cover the surface (that is, the surfaces 4a of the plurality of beads 4) of the porous structure 3 formed of the aggregate of the plurality of bead-like particles (the beads 4 in the present embodiment). That is, the material of the substrate 2 (i.e., the beads 4) is protected by the protective layer 7 so as not to be exposed to the outside. Thus, when the sample is ionized by irradiating the first surface 2a of the substrate 2 with the energy beam (that is, the third step described above), it is possible to effectively suppress the generation of a component derived from the material of the substrate 2 as a noise component. In addition, in the above-described configuration, since the conductive layer 6 is not covered with the protective layer 7 and is exposed to the outside, it is possible to easily and reliably apply a voltage to the conductive layer 6, compared to a case where the conductive layer 6 is covered with the protective layer 7.

The porous structure 3 is formed of an aggregate of a plurality of bead-like particles (beads 4 in the present embodiment). The porous structure 3 has a joint 5 in which the beads 4 adjacent to each other are bonded to each other to form a recessed portion between the particles 4. The protective layer 7 is provided so as to cover at least a portion constituting the first surface 2a among the surfaces 4a of the plurality of beads 4 and the joint5 (in the present embodiment, the entire of the surfaces 4a of the plurality of beads 4 and the joint 5). According to the above-described configuration, the surfaces 4a of the plurality of beads 4 and the joint 5 are protected by the protective layer 7 so as not to be exposed to the outside. This makes it possible to effectively suppress the generation of component derived from the material of the substrate 2 as noise component when ionizing a sample by irradiating the first surface 2a of the substrate 2 with an energy beam, in a case where the porous structure 3 is formed of a plurality of the beads 4.

In addition, according to the ionizing method using the sample support 1 (the first step to the third step), in a case where a transfer method in which the sample Sa to be ionized is transferred to the first surface 2a of the sample support 1 is performed, the same effect as in the above-described effect of the sample support 1 can be obtained. That is, it is possible to effectively suppress generation of a component derived from a material of the substrate 2 as a noise component when a sample is ionized by irradiating the first surface 2a of the substrate 2 with an energy beam. In addition, according to the mass spectrometry method using the sample support 1 (the first step to the fourth step), the same effect as that of the ionizing method can be obtained by including the first step, the second step, and the third step of the ionizing method.

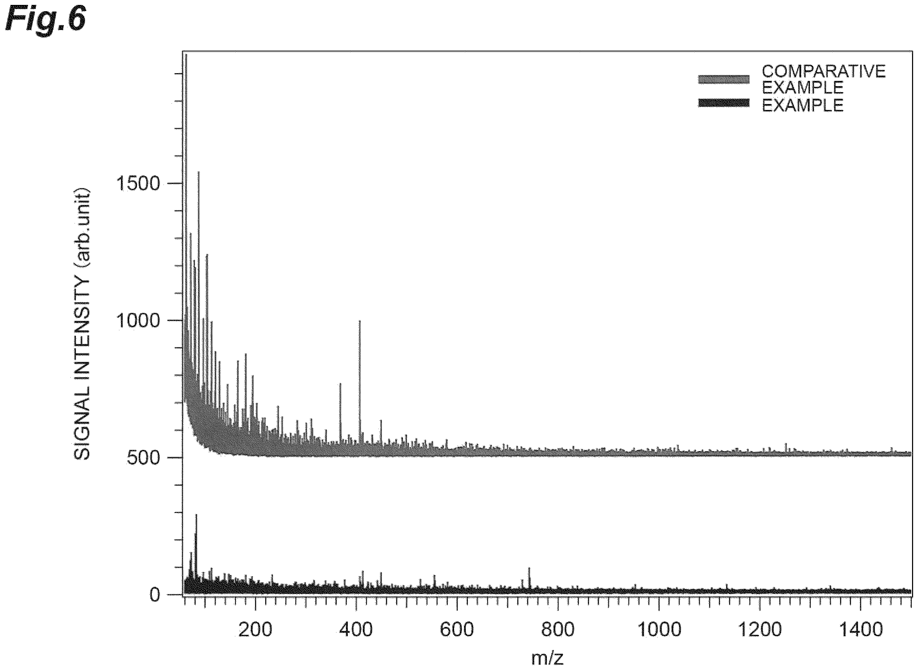

FIG. 6 is a graph showing the measurement results of blank noise in the Example and the Comparative Example. In FIG. 6, the horizontal axis represents the mass-to-charge ratio (m/z) and the vertical axis represents the signal intensity (arbitrary unit: arb. unit). More specifically, FIG. 6 shows mass spectrum obtained by the above-described mass spectrometry method in a state where there is no sample to be analyzed (that is, a state where the component Sa1 of the sample is not attached to the first surface 2a) for each of the Example and the Comparative Example. In FIG. 6, in order to facilitate comparison between the mass spectrum of the Example and the mass spectrum of the Comparative Example, the origin of the signal intensity of the mass spectrum of the Comparative example (that is, a value corresponding to a signal intensity of 0) is shifted by "+ 500".

The Example is a sample support having a configuration similar to the sample support 1 described above. More particularly, the Example is a sample support having the protective layer 7 (see FIG. 3) formed over the surfaces 4a of the beads 4 and the joints 5. In the Example, the protective layer 7 is an ALD film formed by forming a film of aluminum oxide by ALD. Also, the protective layer 7 is 8 nm thick.

The Comparative Example is a sample support having a configuration in which the protective layer 7 of the sample support 1 described above is omitted. That is, in the Comparative Example, the surfaces 4a of the beads 4 are exposed on the first surface 2a side of the substrate 2.

As shown in FIG. 6, in the Comparative Example, significant blank noise (i.e., background noise detected in the absence of a sample) was detected particularly in the low-mass region (60 m/z to 400 m/z). If the sample to be analyzed has a peak signal in the low-mass region, the presence of the blank noise may make it difficult to detect (analyze) the peak signal.

On the other hand, in the Example in which the above-described protective layer 7 was formed, although some blank noise was detected in the above-described low-mass region, it was confirmed that the occurrence of blank noise was significantly suppressed compared to the Comparative Example. That is, it was confirmed that the blank noise derived from the beads 4 was reduced by covering at least a portion constituting the first surface 2a among the surfaces 4a of the beads 4 and the joints 5 with the protective layer 7 in the first surface 2a irradiated with the energy beam ( the laser beam L). More specifically, it was confirmed that the number of types of blank noise (the number of peak signals) in the Example was suppressed to be smaller than the number of types of blank noise in the Comparative Example, and the signal intensity of the blank noise in the Example was smaller than the signal intensity of the blank noise in the Comparative Example.

### [Modification]

The present disclosure is not limited to the embodiments described above. The materials and shapes of the components are not limited to the above-described materials and shapes, and various materials and shapes can be used. In addition, a part of the configuration in one embodiment or modification described above can be arbitrarily applied to the configuration in another embodiment or modification.

For example, in the above-described embodiment, the sample support 1 includes only the substrate 2, but the sample support 1 may include a member other than the substrate 2. For example, a support member (a frame or the like) for supporting the substrate 2 may be provided at a part (for example, a corner or the like) of the substrate 2.

The sample Sa is not limited to the slices of the fruit (lemon) exemplified in the above-described embodiment. The sample Sa may have a flat surface, or may have an uneven surface. The sample Sa may be other than fruits, and may be, for example, leaves of plants. In this case, imaging mass spectrometry of the surface (leaf vein) of the leaf can be performed by transferring components of the surface of the leaf, which is the sample Sa, to the first surface 2a.

In addition, as in the above-described embodiment, in a case where the entire of the substrate 2 is made of the porous structure 3, that is, in a case where the sample support 1 has the porous structure 3 configured to communicate the first surface 2a and the second surface 2b, the above-described second step may be modified as follows. That is, in the second step, the sample support 1 may be placed on the sample Sa so that the second surface 2b of the substrate 2 faces the sample Sa. For example, in the above-described embodiment, the sample Sa may be arranged between the support surface 8a of the support substrate 8 and the second surface 2b of the sample support 1. In this case, the component Sa1 of the sample Sa moves by capillary phenomenon from the second surface 2b side of the substrate 2 through the porous structure 3 (i.e., the gap S) to the first surface 2a side of the substrate 2. That is, in this modified example, in the third step, after the component Sa1 of the sample moves from the second surface 2b side to the first surface 2a side by the capillary phenomenon, the laser beam L may be irradiated to the first surface 2a. According to the ionizing method and the mass spectrometry method including the second step and the third step according to the above-described modification, the same effect as that of the above-described sample support 1 can be obtained in the case of adopting the suction method in which the sample Sa to be ionized is sucked up from the second surface 2b side to the first surface 2a side of the sample support 1 using the capillary phenomenon. That is, it is possible to effectively suppress generation of a component derived from a material of the substrate 2 as a noise component when a sample is ionized by irradiating the first surface 2a of the substrate 2 with an energy beam.

Further, in the above-described embodiment, the entire of the substrate 2 is constituted by the porous structure 3 which is a bead aggregate, but the porous structure 3 may be formed in a part of the substrate 2. For example, the porous structure 3 may be formed only in a region of a central portion (a partial region of the first surface 2a) defined as a measurement region for transferring the sample Sa in the substrate 2, and the porous structure 3 may not be formed in other portions of the substrate 2. Further, the porous structure 3 may not be formed over the entire region from the first surface 2a to the second surface 2b. That is, the porous structure 3 may be opened at least to the first surface 2a, and may not be opened to the second surface 2b. For example, the substrate 2 may be composed of a flat plate and a porous structure provided on the plate. As an example, the substrate 2 may be constituted by a glass plate and a glass beads aggregate (porous structure) formed of glass beads provided on the glass plate. In this case, the surface of the glass beads aggregate on the side opposite to the glass plate is the first surface 2a, and the surface of the glass plate on the side opposite to the glass beads aggregate is the second surface 2b.

The particles constituting the porous structure 3 are not limited to substantially spherical beads, and may have a shape other than a substantially spherical shape.

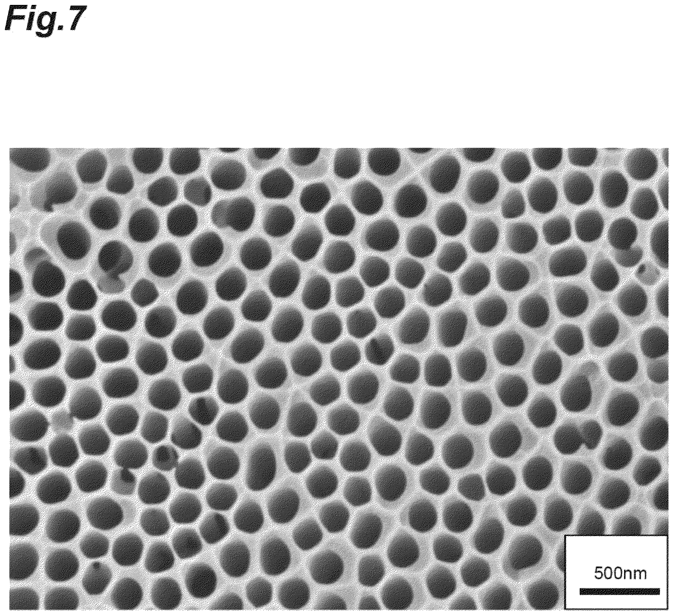

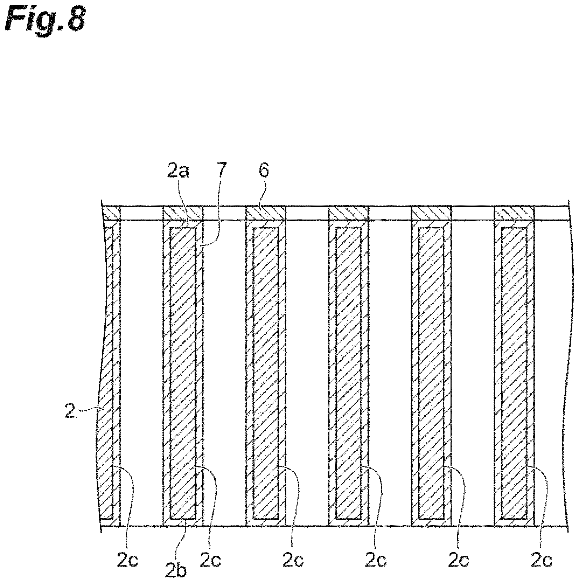

Further, the substrate 2 may be an anodic oxide film obtained by anodization of valve metals or silicon. Examples of the valve metal include Al (aluminum), Ta (tantalum), Nb (niobium), Ti (titanium), Hf (hafnium), Zr (zirconium), Zn (zinc), W (tungsten), Bi (bismuth), and Sb (antimony). For example, the substrate 2 may be porous alumina obtained by anodic oxidation of aluminum. In this way, the porous structure of the substrate 2 may have a plurality of pores 2c which are open to at least the first surface 2a and extend in the thickness direction of the substrate 2. In other words, as shown in FIGS. 7 and 8, the porous structure of the substrate 2 may be a structure in which a plurality of pores 2c extending linearly along the thickness direction are provided as main pores (i.e., a regular structure constituted by pores 2c extending mainly in one direction). In FIG. 7, a black portion corresponds to the pore 2c, and a white portion corresponds to the substrate 2 (the partition wall portion between the adjacent pores 2c).

In this case, as shown in FIG. 8, the protective layer 7 may be provided so as to cover the first surface 2a, the second surface 2b, and inner surfaces of the pores 2c. The protective layer 7 may be provided at least on the first surface 2a (i.e., between the conductive layer 6 and the first surface 2a), and is not necessarily provided on the second surface 2b and the inner surfaces of the pores 2c. However, from the viewpoint of suitably suppressing the generation of noise component derived from the material of the substrate 2 when the first surface 2a is irradiated with the laser light L, the protective layer 7 is preferably provided not only on the first surface 2a but also on an edge portion of the inner surface of the pore 2c on the first surface 2a side (that is, a part of the inner surface continuous with the first surface 2a). According to the above-described configuration, in the case where the porous structure is formed by the plurality of pores 2c extending in the thickness direction of the substrate 2, it is possible to effectively suppress the generation of component derived from the material of the substrate 2 as noise component when ionizing the sample by irradiating the first surface 2a of the substrate 2 with the energy beam. In the example of FIG. 8, the pore 2c is configured as a through hole which penetrates from the first surface 2a to the second surface 2b, but the pore 2c may be a concave hole portion which opens only to the first surface 2a (that is, does not open to the second surface 2b).

Further, in the mass spectrometry method using the sample support 1, an object to which a voltage is applied by the voltage application unit 14 is not limited to the support surface 8a of the support substrate 8. For example, the voltage may be applied to a member (for example, the conductive tape 9) other than the support substrate 8.

In the mass spectrometry method using the sample support 1, the mass spectrometer 10 may be a scanning-type mass spectrometer or a projection-type mass spectrometer. In the case of the scan type, a signal of one pixel having a size corresponding to the spot size of the laser beam L is acquired for each irradiation of the laser beam L with the irradiation unit 13. That is, scanning (change of irradiation position) and irradiation of the laser beam L are performed for each pixel. On the other hand, in the case of the projection-type, a signal of an image (a plurality of pixels) corresponding to the spot size of the laser beam L is acquired for each irradiation of the laser beam L with the irradiation unit 13. In the case of the projection-type spectrometer, when the entire sample to be analyzed is included in the spot size of the laser beam L, imaging mass spectrometry can be performed by irradiating the laser beam L once. When the entire sample to be analyzed is not included in the spot size of the laser beam L in the projection-type spectrometer, a signal of the entire sample to be analyzed can be obtained by scanning and irradiating the laser beam L in the same manner as in the scanning-type spectrometer. The above-described ionization method can also be used for other measurements and experiments such as ion mobility measurement.

The use of the sample support 1 is not limited to ionizing samples by irradiation of the laser beam L. The sample support 1 can be used for ionizing a sample by irradiation with energy beams such as laser beams, electro-spray, ion beams, and electronic beams. In the ionization method and the mass spectrometry method described above, the sample can be ionized by irradiation with such an energy beam.

### Reference Signs List

1: sample support, 2: substrate, 2a: first surface, 2b: second surface, 2c: pore, 3: porous structure, 4: beads (particle), 4a: surface, 5: joint, 6: conductive layer, 7: protective layer, L: laser beam (energy beam), Sa: sample, Sa1: component, Sa2: sample ion.

## Claims

1. A sample support for ionizing a sample, comprising:
a substrate having a first surface, a second surface opposite to the first surface, and a porous structure opening at least to the first surface;
a protective layer provided to cover a surface of the porous structure; and
a conductive layer provided so as to cover a portion of the protective layer at least provided on the first surface.

2. The sample support according to claim 1, wherein the protective layer is formed of at least one of an oxide, a fluoride, a nitride, a carbide, and a metal.

3. The sample support according to claim 1, wherein the protective layer is formed of at least one of aluminum oxide, magnesium oxide, hafnium oxide, silicon oxide, magnesium fluoride, aluminum nitride, silicon nitride, silicon carbide, tungsten, hafnium, diamond, and graphite.

4. The sample support according to any one of claims 1 to 3, wherein the protective layer is an ALD layer.

5. The sample support according to any one of claims 1 to 4, wherein
the porous structure is formed of an aggregate of a plurality of particles,
the porous structure has a joint in which the particles adjacent to each other are bonded to each other to form a recessed portion between the particles, and
the protective layer is provided so as to cover at least a portion of surfaces of the plurality of particles and the joint, the portion constituting the first surface.

6. The sample support according to claim 5, wherein an average diameter of the joint in the porous structure is equal to or greater than one tenth of an average diameter of the particle in the porous structure and less than the average diameter of the particle.

7. The sample support according to claim 5 or 6, wherein the particles are glass beads.

8. The sample support according to any one of claims 1 to 5, whrein
the substrate is an anodic oxide film formed of valve metals or silicon, and
the porous structure has a plurality of pores that open at least to the first surface and extend in a thickness direction of the substrate.

9. An ionization method including:
a first step of preparing the sample support according to claim 1;
a second step of transferring the sample to the first surface; and
a third step of ionizing a component of the sample by irradiating the first surface with an energy beam.

10. An ionization method including:
a first step of preparing the sample support according to claim 1, the sample support having the porous structure configured to allow the first surface and the second surface to communicate with each other;
a second step of placing the sample support on the sample so that the second surface faces the sample; and
a third step of ionizing the component of the sample by irradiating the first surface with an energy beam after the component of the sample has moved from the second surface side to the first surface side by a capillary phenomenon.

11. A mass spectrometry method including:
the first step, the second step, and the third step of the ionization method according to claim 9 or 10; and
a fourth step of detecting the component ionized in the third step.
